# EUROPÄISCHE PATENTSCHRIFT

(11) **EP 2 140 174 B1**
(45) Veröffentlichungstag und Bekanntmachung des Hinweises auf die Patenterteilung: **29.06.2011**
(21) Anmeldenummer: 08757940.5
(22) Anmeldetag: 16.04.2008
(51) Int. Cl.: F16H 55/17

(54) **Zahnrad**
Toothed gear
Roue dentée

(30) Priorität: 18.04.2007 DE 102007018563
(43) Veröffentlichungstag der Anmeldung: 06.01.2010
(73) Patentinhaber: Neumayer Tekfor Holding GMBH, 77756 Hausach (DE)
(72) Erfinder: DERSE, Matthias, 79215 Elzach (DE)
(86) Internationale Anmeldenummer: PCT/DE2008/000632
(87) Internationale Veröffentlichungsnummer: WO 2008/128513

(56) Entgegenhaltungen:
- EP-A- 0 793 031
- EP-A- 0 907 039
- EP-A- 1 225 329
- WO-A-02/08633
- DE-A1- 2 628 826
- DE-A1- 4 408 427
- DE-A1- 19 533 446
- GB-A- 243 518
- JP-A- 56 080 556
- US-A1- 2003 024 345

## Beschreibung

Die Erfindung bezieht sich auf ein ZAHNRAD, wie es beispielsweise durch die DE 26 28 826 A1 oder GB 243 518 bekannt geworden ist. Diese Schriften offenbaren beide die vorkennzeichnenden Merkmale des Anspruchs 1.

Bei der oben genannten DE-A1 besteht das Zahnrad, aus einem radial inneren, mit Außenprofilierung versehenen, mit einer Innenausnehmung auf einer Welle aufsetzbaren Nabenkörper und einem vom Nabenkörper mit radialem Abstand vorgesehenen Außenkörper als Zahnkranz mit Innenprofilierungen und einer zwischen Innen- und Außenprofilierungen vorgesehenen Zwischenschicht, und zwar einer Isolierschicht, die sowohl dämpfen als auch eine elektrische Isolierung darstellen soll. Innen- und Außenkörper sind dabei auf die dazwischen vorgesehene Isolierschicht aufgesteckt.

Bei der oben angeführten GB PS ist das Außenteil ebenfalls ein Zahnkranz mit nach außen gerichteten Verzahnungen und nach innen gerichteten Vorsprüngen. Der innere Nabenkörper ist ein flanschartiger Körper mit axialen lochartigen Durchbrüchen. Das zwischen die beiden Teile eingebrachte synthetische Material verbindet die beiden Teile, wobei zur Drehmomentübertragung vom bzw. auf den Nabenkörper neben der vorhandenen Haftkraft auch ein Formschluss über die in dem Flansch des Innenteils vorgesehenen lochartigen Ausnehmungen hergestellt wird. Vom bzw. zum Zahnkranz erfolgt die Drehmomentübertragung zunächst ebenfalls über die Haftkraft und weiterhin über einen Formschluss über die radial nach innen weisenden Bereiche des Zahnkranzes und die dazwischen befindlichen Bereiche des Kunststoffes.

Sowohl bei Einrichtungen gemäß der DE OS, als auch der GB PS besteht der Nachteil eines hohen Fertigungsaufwandes, insbesondere wegen der erforderlichen, umformenden und spanenden Bearbeitung der Metallteile. Bei Einrichtungen gemäß der GB PS muss die aus Stahl gefertigte Nabe 3 umgebördelt werden, um den Rand 6 zu erhalten. Der Rand 6 muss aufwändig gerändelt werden, um einen sehr guten Kontakt zu der Verbundmasse 4 zu gewährleisten. Die Bohrungen 7 müssen entweder gestanzt oder gebohrt werden.

Die kantigen Profile, die in der DE OS gezeigt sind, lassen sich nur durch spanabhebende Bearbeitung herstellen, z.B. durch Räumen.

Bei Einrichtungen der GB PS besteht noch der Nachteil, dass die die Öffnungen im Flansch durchdringenden Kunststoffpropfen nur eine relativ geringe Drehmomentübertragung ermöglichen, weil die das Drehmoment übertragende Fläche relativ gering ist. Außerdem können bei Drehmomentstößen die in Achsrichtung durchreichenden Propfen abgeschert werden.

Verzahnungen, wie sie in der DE OS gezeigt sind, sind in dieser Hinsicht günstiger, jedoch erfordern, wie bereits erwährt, die Verzahnungen einen höheren Fertigungsaufwand.

Dem gegenüber lag der vorliegenden Erfindung die Aufgabe zugrunde, derartige Verbundkörper preiswerter herzustellen, sowohl hinsichtlich der eingesetzten Materialien, der Montage und der Bearbeitung. Außerdem sollen höhere Drehmomentwerte übertragen werden können.

Dies wird gemäß der vorliegenden Erfindung dadurch erzielt, dass das Zahnrad aus einem radial inneren, mit Außenprofilierungen versehenen, mit seiner Innenausnehmung auf eine Welle aufsetzbaren Nabenkörper besteht, sowie einem vom Nabenkörper in radialem Abstand vorgesehenen Außenkörper mit Innenprofilierungen, bei dem weiterhin zwischen Innen- und Außenprofilierungen eine diese verbindende Zwischenschicht vorgesehen ist, die zwischen die zwei Teile eingebracht sein kann und wobei die Nabe- und/oder der Außenkörper durch Massivumformen hergestellte Teile sind. Dabei kann es in vielen Fällen vorteilhaft sein, wenn zumindest eines dieser Teile - Außen- oder Nabenkörper - ein aus Stahl bestehendes, insbesondere massivumgeformtes, wie geschmiedetes Stahlteil ist. Derartige Teile sind preiswert und einfach herstellbar. Dabei ist es weiterhin von Vorteil, dass die angeformten Außen- und/oder Innenprofilierungen nicht durch eine spanende Bearbeitung verändert zu werden brauchen, wobei als Vorteil noch hinzukommt, dass durch die Rauhigkeit die Oberfläche noch vergrößert wird, so dass eine verbesserte Haftung des zwischen Außen- und Nabenkörper eingebrachten, z.B. eingespritzten Kunststoffmaterials, das ein Thermoplast sein kann, erzielt wird.

In den weitaus meisten Fällen wird es ausreichen, wenn die Oberflächen der Innen- und/oder Außenprofile nach dem Umformen durch einen Reinigungsprozess bearbeitet sind, der auch Strahlen, z.B. Sand- oder Kugelstrahlen oder dergleichen, zumindest beinhalten kann.

Der Oberflächenanteil zur Herstellung der Verbindung zwischen den Oberflächen der Außen- und/oder Innenprofile ist erfindungsgemäß noch weiter vergrößert, dadurch daß wenigstens eine der Profilierungen sinusförmig oder sinusähnlich ausgeführt ist.

Die Profilierungen können auch derart ausgeführt sein, dass sie einander radial überlappen.

Eine vorteilhafte Möglichkeit der Herstellung eines derartigen Zahnrades besteht darin, dass der Außenkörper insbesondere im Falle der Verwendung des Bauteiles für ein Zahnrad, nach einem gegebenenfalls erforderlichen Härtevorgang, bereits vor dem Verbinden mit dem Innenkörper, also z.B. noch vor dem Vulkanisieren der beiden Teile, fertig bearbeitet ist, die Außenverzahnung fertig bearbeitet ist, also z.B. gehont, geschliffen, geschabt, oder dergleichen. Weiterhin kann es vorteilhaft sein, wenn vor dem Verbinden von Außenkörper und Nabenkörper (auch) der Innenkörper fertig bearbeitet ist, insbesondere die zuvor gehärtete Innenkontur fein bzw. fertigbearbeitet ist, wobei die Innenkontur eine glatte Bohrung sein oder eine Verzahnung aufweisen kann. Weiterhin kann der Verbundkörper in vorteilhafter Weise hergestellt werden, indem die Innenkontur des Innenteils und/oder die Außenkontur des Außenteils erst nach dem Verbinden des Innen- und Außenteiles mittels der Zwischenschicht fertig bearbeitet wie, z.B. feinbearbeitet wird. Durch eine derartige Methode bzw. derartiges Verfahren können Innen- und Außenteil ohne allzu große Anforderungen an die Genauigkeit für sich hergestellt und auch miteinander verbunden werden, wobei vorhandene Toleranzen durch die nach dem Verbinden, z.B. nach dem Zusammen-Vulkanisieren der beiden Teile darauffolgende Bearbeitung ausgeglichen werden.

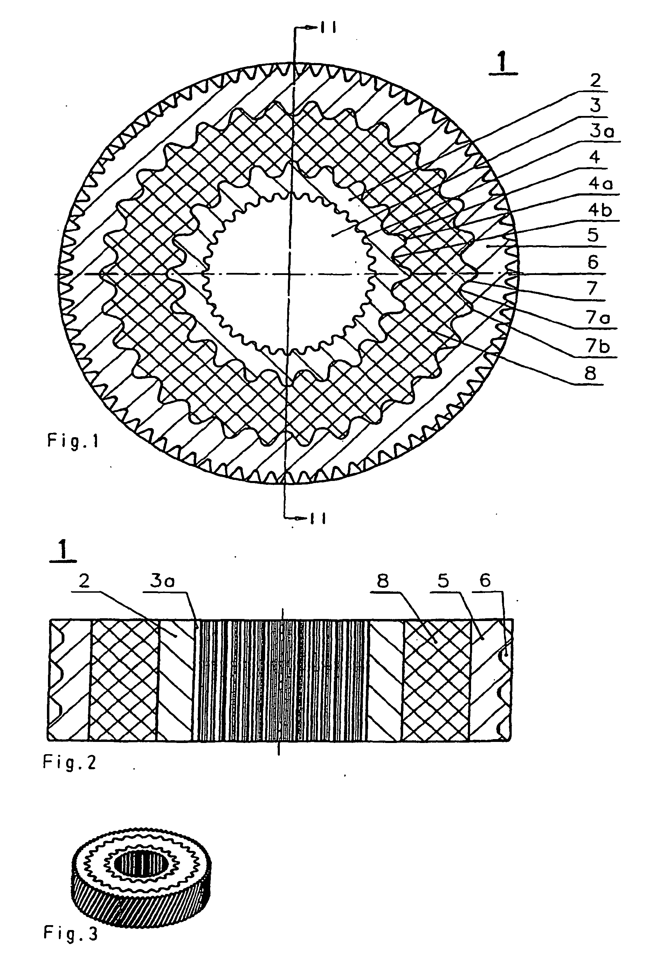

Anhand der Figuren 1 - 2 sei die Erfindung näher erläutert.

Dabei zeigt:
Figur 1 einen efindungsgemäßen Verbundkörper in Form eines Zahnrades 1 in Draufsicht,
Figur 2 einen Schnitt entsprechend der Linie **II II** der Figur 1 und
Figur 3 eine verkleinerte 3D-Ansicht eines Verbundzahnrades

Das Zahnrad 1 besteht aus einem Nabenkörper 2, der eine Innenausnehmung 3 besitzt und an seinem Außenumfang eine Profilierung 4. Die Profilierung ist dabei gebildet aus Wellenbergen 4a und Wellentälem 4b.

In radialem Abstand zum Nabenkörper 2 umschließt der Außenkörper 5 die Nabe 2. Dieser Außenkörper ist radial außen mit einem Verzahnungsprofil 6 versehen und radial innen mit einer Innenprofilierung 7, die aus Wellenbergen 7a und Wellentälern 7b gebildet ist.

Sowohl die Profilierung 4 als auch die Profilierung 7 ist sinusförmig bzw. sinusähnlich ausgestaltet. Zwischen den Profilierungen 4 und 7 ist mindestens eine elastische geräusch- und/oder schwingungsdämmende Zwischenschicht 8 vorgesehen, die eingespritzt, eingegossen bzw. vulkanisiert ist. Diese Zwischenschicht 8 kann auch lediglich auf einem der Teile 2, 5 aufgebracht wie aufvulkanisiert, aufgeklebt oder dergleichen sein oder ein für sich hergestellter Körper, auf dem beide Teile auf- bzw. eingesteckt und mit wenigstens einem der Teile verbunden, wie verklebt, verschmolzen oder dergl. ist.

Nabenteil 2 und Außenteil 5 sind im vorliegenden Ausführungsbeispiel als Schmiedeteile ausgebildet und eine oder beide der Profilierungen 4, 7 weisen zumindest annähernd die beim Schmieden erhaltene Struktur auf; sie sind hier nicht spanabhebend bearbeitet, sie sind jedoch vor dem Verbinden mit der oder vor dem oder Einbringen der Zwischenschicht 8 zweckmäßigerweise gereinigt, z.B. chemisch gereinigt und/oder gestrahlt.

Vor dem Verbinden der Nabe 2 und/oder des Außenkörpers 5 oder dem Einbringen der Zwischenschicht 8 kann der Nabenkörper 2 fertigbearbeitet sein, d.h. die zuvor ggf. gehärtete runde Innenkontur der Ausnehmung 3 ist z.B. geschliffen, hart gedreht, gehont oder dergleichen.

Die Innenkontur kann aber auch mit einem Verzahnungsprofil 3a versehen sein, das, nachdem zumindest dieses Verzahnungsprofil 3a des Nabenteiles 2 zuvor gehärtet wurde, vor dem Zusammenbau mit der Zwischenschicht und/oder dem Außenteil, wie oben, fertig bearbeitet ist.

Die runde oder mit einem Verzahnungsprofil versehene Innenkontur kann aber auch ungehärtet und wie beschrieben bearbeitet sein.

Ebenso kann, vor dem Einbringen oder Einvulkanisieren der Zwischenschicht 8 oder vor dem Aufbringen des Außenteiles 5 d.h. dem Verbinden der Profilierung 7 mit der Zwischenschicht 8, also z.B. dem Verkleben der Profilierung mit der zuvor auf den Nabenkörper 2 aufgebrachten Zwischenschicht, die Verzahnung 6 des Außenteils 5 fertig bearbeitet sein.

Es kann aber auch vorteilhaft sein, die Fertigbearbeitung der Innenkontur 3 und/oder der Verzahnung 6 vorzunehmen, nachdem Nabe 2 und Außenkörper 5 durch die Zwischenschicht 8 miteinander verbunden sind.

Es ist ersichtlich, dass durch die Herstellung von Nabe 2 und/oder Außenteil 5 als Schmiedeteile und des Wegfalles irgendwelcher spanbildender Bearbeitungen der Profilierungen 4 und 7 die Herstellung derartiger Verbundkörper erheblich verbilligt werden kann. Durch die relativ großen Oberflächen, nämlich die zumindest annähernd sinusförmige Ausgestaltung der Profilierungen 4 und 7 sowie durch die im wesentlichen aufrecht erhaltene relativ rauhe Schmiedestruktur dieser Oberflächen, kann die Haftkraft zwischen diesen Oberflächen und dem Zwischenkörper erheblich verbessert werden und somit auch die Drehmomentübertragung und die Haltbarkeit, also die Lebensdauer. Durch die sanften Rundungen der sinusartigen ausgestalteten Profilierungen wird die Gefahr von Abscherungen praktisch aufgehoben.

Derart aufgebaute Verbundkörper eignen sich im Grunde der ihnen anhaftenden Vorteile ganz besonders für die Anwendung in Kraftfahrzeugen als Drehmoment übertragende Festräder oder Losräder.

## Patentansprüche

1. Zahnrad (1), bestehend aus einem radial inneren, mit Außenprofilierungen (4) versehenen, mit seiner Innen-Ausnehmung auf eine Welle aufsetzbaren Nabenkörper (2,) einem vom Nabenkörper (2) mit radialem Abstand vorgesehenen Außenkörper (5) mit Innenprofilierungen (7) und einem radial außen liegendem Verzahnungsprofil (6) und mit einer zwischen Innen- und Außenprofilierungen vorgesehenen, diese verbindende elastische geräusch- und/oder schwingungsdämpfende Zwischenschicht (8), **dadurch gekennzeichnet, dass** der Naben- und/oder der Außenkörper durch MassivUmformen hergestellte raue Metallteile sind,
dass die Innen- und/oder Außenprofile nicht durch spanende Bearbeitung erzeugt oder verändert sind,
dass die Außenprofilierung (4) des Nabenkörpers (2) aus Wellenbergen (4a) und Wellentälern (4b) besteht,
dass die Innenprofilierung (7) des Außenkörpers (5) aus Weitenbergen (7a) und Wellentäler (7b) besteht,
und
dass wenigstens eine der Profilierungen (4,7) sinusförmig oder sinusähnlich ausgebildet ist.

2. Zahnrad (1) nach Anspruch 1, **dadurch gekennzeichnet, dass** die profilierte(n) Oberfläche(n) nach dem Umformen durch einen Reinigungsprozess bearbeitet ist / sind.

3. Zahnrad nach einem der Ansprüche 1 - 2, **dadurch gekennzeichnet, dass** die profiliert(n) Oberfläche(n) gestrahlt ist / sind.

4. Zahnrad nach einem der Ansprüche 1 - 3, **dadurch gekennzeichnet, dass** der Außenkörper (5) vor dem Verbinden mit dem Nabenkörper (2) fertig bearbeitet ist, insbesondere die Außenverzahnung gehärtet und z.B. hart-feinbearbeitet ist.

5. Zahnrad nach einem der Ansprüche 1 - 4, **dadurch gekennzeichnet, dass** der Nabenkörper (2) vor dem Verbinden mit dem Außenkörper (5) fertig bearbeitet ist, insbesondere die Innenkontur gehärtet und z.B. hart-feinbearbeitet ist.

6. Zahnrad nach einem der Ansprüche 1 - 4, **dadurch gekennzeichnet, dass** die Innenkontur des Nabenkörpers (2) ein Verzahnungsprofil ist, das nach dem Erzeugen des Profiles gehärtet ist und nach dem Härten nicht feinbearbeitet ist.

7. Zahnrad nach einem der Ansprüche 1 - 6, **dadurch gekennzeichnet, dass** nach dem Verbinden des Naben- und Außenkörpers (2,5) die Innenkontur des Nabenkörpers (2) und/oder der Außenkontur des Außenkörpers (5) hart fertigbearbeitet ist.

## Claims

1. Gearwheel (1), comprising a radially inner hub body (2) provided with external profiles (4) and having an inner recess for mounting said hub body on a shaft, an outer body (5) spaced with a radial distance from said hub body (2) provided with internal profiles (7) and a radially external tooth profile (6) and an elastic sound and/or vibration-damping intermediate layer (8) provided between and connecting the internal and external profiles. This layer is **characterised by** the fact that the hub body and/or outer body are rough metal parts produced by solid forming,
that the internal and/or external profiles are not produced or modified by machining,
that the external profile (4) of the hub body (2) comprises peaks (4a) and valleys (4b), that the internal profile (7) of the outer body (5) comprises peaks (7a) and valleys (7b), and
that at least one of the profiles (4, 7) is of a sinusoidal or similar configuration.

2. Gearwheel (1) according to claim 1, **characterised by** the fact that profiled surface(s) is/are subjected to a cleaning process after forming.

3. Gearwheel according to claims 1 - 2, **characterised by** the fact that the profiled surface(s) is/are blasted.

4. Gearwheel according to claims 1 - 3, **characterised by** the fact that the outer body (5) is finished before being connected to the hub body (2); the external teeth in particular are hardened and, for example, hard finished.

5. Gearwheel according to claims 1 - 4, **characterised by** the fact that the hub body (2) is finished before being connected to the outer body (5); the inner contour in particular is hardened and, for example, hard finished.

6. Gearwheel according to claims 1 - 4, **characterised by** the fact that the inner contour of the hub body (2) is a tooth profile which is hardened after the production of the profile and is not precision machined after hardening.

7. Gear wheel according to claims 1 - 6, **characterised by** the fact that the inner contour of the hub body (2) and/or the outer contour of the outer body (5) is hard finished after the hub body and outer body (2, 5) are connected.

## Revendications

1. Roue dentée (1) composée d'un corps de moyeu (2) intérieur radial, doté de profilages extérieurs (4) et montable sur un arbre avec son creux intérieur, d'un corps extérieur (5) avec profilages intérieurs (7), doté d'une distance radiale depuis le corps de moyeu (2) et d'un profilé d'engrenage (6) extérieur radial, avec une couche intermédiaire de liaison élastique (8) entre les profilages intérieurs et extérieurs, amortissant les bruits et/ou les oscillations, **caractérisée par le fait que** le corps de moyeu et/ou le corps extérieur sont des pièces métalliques brutes fabriquées par formage massif,
que les profilés intérieurs et/ou extérieurs ne sont pas créés ou modifiés par un usinage par enlèvement de copeaux,
que le profilage extérieur (4) du corps de moyeu (2) est composé de crêtes (4a) et de creux (4b),
que le profilage intérieur (7) du corps extérieur (5) est composé de crêtes (7a) et de creux (7b),
et
qu'au moins l'un des profilages (4,7) a une forme sinusoïdale ou similaire à celle d'un sinus.

2. Roue dentée (1) conformément à la revendication 1, **caractérisée par le fait que** la surface profilée est ou les surfaces profilées sont usinées par un procédé de nettoyage après le formage.

3. Roue dentée conformément à l'une des revendications 1 à 2, **caractérisée par le fait que** la surface profilée est ou les surfaces profilées sont irradiées.

4. Roue dentée conformément à l'une des revendications 1 à 3, **caractérisée par le fait que** le corps extérieur (5) est fini avant l'assemblage avec le corps de moyeu (2), en particulier que l'engrenage extérieur est trempé et, par exemple, soumis à un usinage dur-fini.

5. Roue dentée conformément à l'une des revendications 1 à 4, **caractérisée par le fait que** le corps de moyeu (2) est fini avant l'assemblage avec le corps extérieur (5), en particulier que le contour intérieur est trempé et, par exemple, soumis à un usinage dur-fini.

6. Roue dentée conformément à l'une des revendications 1 à 4, **caractérisée par le fait que** le contour intérieur du corps du moyeu (2) est un profilé d'engrenage qui est trempé après la création du profilé et qui n'est pas soumis à un usinage fin après la trempe.

7. Roue dentée conformément à l'une des revendications 1 à 6, **caractérisée par le fait que** le contour intérieur du corps de moyeu (2) et/ou le contour extérieur du corps extérieur (5) est soumis à un usinage dur-fini après l'assemblage du corps de moyeu et du corps extérieur (2, 5).
